(19) Europäisches Patentamt
European Patent Office
Office européen des brevets

(11) Veröffentlichungsnummer: **0 236 895**
**A2**

(12) # EUROPÄISCHE PATENTANMELDUNG

(21) Anmeldenummer: **87102910.4**

(22) Anmeldetag: **02.03.87**

(51) Int. Cl.⁴: **C08G 18/32**, C08G 18/66, C08J 9/02, C08J 9/14

(30) Priorität: **11.03.86 DE 3607964**

(43) Veröffentlichungstag der Anmeldung: **16.09.87 Patentblatt 87/38**

(84) Benannte Vertragsstaaten: **AT BE DE ES FR GB IT NL SE**

(71) Anmelder: **BAYER AG**
**Konzernverwaltung RP Patentabteilung**
**D-5090 Leverkusen 1 Bayerwerk(DE)**

(72) Erfinder: **Sommerfeld, Claus-Dieter, Dr.**
**Oberdreisbachhöhe 42**
**D-5203 Much(DE)**
Erfinder: **Rasshofer, Werner, Dr.**
**Leopold-Gmelin-Strasse 31**
**D-5000 Köln 80(DE)**

(54) **Verfahren zur Herstellung eines zelligen Polyurethans.**

(57) Ein Verfahren zur Herstellung eines zelligen Polyurethans durch Umsetzung eines Polyisocyanats mit einer NCO-reaktiven Komponente, enthaltend

1. mindestens eine NCO-reaktive Gruppe aufweisende Komponente des Molekulargewichtsbereichs 60 -1999 und der Funktionalität 2 -8,
2. gegebenenfalls mindestens eine NCO-reaktive Gruppe aufweisende Komponente des Molekulargewichtsbereichs 2000 -12000 und der Funktionalität 2 -8,
3. in Gegenwart eines Amin-Kohlendioxid-Adduktes und
4. gegebenenfalls Wasser, Treibmitteln, Schaumstabilisatoren, Katalysatoren, sowie anderen an sich bekannten Hilfs-und Zusatzmitteln, wobei man die Komponente 3. als eine homogene Mischung aus 0,05 -25 Gew.-Teilen (bezogen auf 100 Gew.-Teile der Komponenten 1. und 2.) eines gegegebenenfalls wasserenthaltenden Adduktes von Kohlendioxid an ein mindestens eine sekundäre Aminogruppe und mindestens eine primäre oder sekundäre Hydroxylgruppe aufweisendes Amin, 0 -50 Gew.-Teilen (bezogen auf 100 Gew.-Teile der Komponenten 1. und 2.) Monofluortrichlormethan und 0,05 -25 Gew.-Teilen (bezogen auf 100 Gew.-Teile der Komponenten 1. und 2.) eines Aminkatalysators einsetzt.

EP 0 236 895 A2

## Verfahren zur Herstellung eines zelligen Polyurethans

Die vorliegende Erfindung betrifft ein Verfahren zur Herstellung von zelligen Polyurethanen unter Verwendung von speziellen Amin-Kohlendioxid-Addukten.

Bei der Herstellung von Schaumstoffen, insbesondere harten Schaumstoffen, die vornehmlich auf Basis Polyurethan hergestellt werden, hat sich die Vorschäummethode bewährt, in der Fachwelt unter dem Begriff "Frothing" bekannt. Darunter versteht man die Vorbereitung des Reaktionsgemisches derart, daß es bereits als sahniger Schaum in den Formhohlraum des Formwerkzeuges eintritt. Der Vorteil liegt in der ruhigen geschlossenen Fließfront, die eine hohe Oberflächengüte gewährleistet. Die im Fertigteil häufig auftretenden, störenden Treibmitteleinschlüsse, die ein nachträgliches Ausbeulen zur Folge haben, werden vermieden.

Dieses Verfahren wird inbesondere bei bestimmten Kühlmöbelkonstruktionen und bei großen Kühlmöbeln mit hohen Isolierstärken, wo das noch nicht schäumende, flüssige Reaktionsgemisch aus undichten Stellen des Gehäuses auslaufen kann, was aufwendige Nacharbeiten zur Folge haben kann, angewandt.

Der Frothing-Effekt wird beispielsweise durch Zugabe eines niedrigsiedenden Treibmittels, wie Difluordichlormethan oder eines Monofluortrichlormethan-Difluordichlormethangemisches erreicht.

Ersetzt man z.B. in einem handelsüblichen Hartschaum, wie er zum Ausschäumen eines Kühlschrankgehäuses verwendet wird, einen Teil des Treibmittels Monofluortrichlormethan (Siedepunkt +23,7°C) durch Dichlordifluormethan (R 12, Siedepunkt -29,8°C) und führt dies unter Druck in flüssiger Form ins Polyol ein, so tritt das Reaktionsgemisch infolge spontaner Verdampfung des R 12 in sahnig vorgeschäumter Form aus dem Mischkopf der Dosiermaschine aus. In dieser Form kann das Reaktionsgemisch aus undichten Stellen des Kühlmöbelgehäuses nicht auslaufen.

Die Vorschäummethode bietet jedoch keine allgemeingültige Lösung für Abdichtprobleme. Hat das aufschäumende Reaktionsgemisch die Kühlmöbelwände ausgefüllt, kann es infolge des Schäumdrucks aus undichten Stellen trotz des Vorschäumens austreten.

Die Verarbeitung dieses Treibmittels bzw. -Gemische ist problematisch, da ihre Siedepunkte unter 0°C liegen und die Anlieferung in Druckbomben erfolgen muß. Die Dosierung solcher Treibmittel über jede Art von Pumpen beinhaltet Probleme, da die stöchiometrischen Mengenanteile genau eingehalten werden müssen, was selbst durch den Einsatz von Hochleistungskolbenpumpen aufgrund der Leckverluste kaum möglich ist.

Durch Zugabe von hohen Gasanteilen kann der Frothing-Effekt ebenfalls erzielt werden. Beispielsweise gibt man in die Polyolkomponente 0,4 bis 0,8 g eines entspannten Gases, z.B. Luft oder Stickstoff aus 1 l Polyol. Hier ist die Problematik ähnlich. Die Dosierung des Gases erfolgt über Strömungsmesser und ist dementsprechend ungenau. Das Gas muß in der Komponente feinstverteilt vorliegen, da nur bei intensiver Vermischung die geforderten Effekte erhalten werden. Ferner muß die Mischung aus Gas und Polyolkomponente bei der Dosierung über die gebräuchlichen Hochdruckpumpen unter so hohem Druck gehalten werden, daß durch die eingemischten Gasblasen keine Fehldosierungen hervorgerufen werden.

Es wurde weiterhin beobachtet, daß durch Verminderung des Anteils von Monofluortrichlormethan, das bereits bei 23,5°C siedet, und durch Ersatz desselben durch Difluordichlormethan oder Gas eine erhebliche Qualitätsverminderung der Außenhaut in Härte und Stärke in Kauf genommen werden muß.

Weiterhin sind gegen die fluorierten Kohlenwasserstoffe Bedenken in ökologischer Hinsicht geäußert worden, so z.B. P. Fabian. Die Naturwissenschaften 67 (1980), S. 109 bis 120 und C. R. Patrick, J. Fluorine Chem. 25 (1984), S. 7 bis 15.

Es war deshalb Aufgabe der vorliegenden Erfindung, ein von den Nachteilen des Standes der Technik freies Verfahren zur Herstellung von Polyurethanhartschäumen nach den Vorschäum-Verfahren bereitzustellen, das

a) mittels stationärer Großanlagen als auch vor Ort mit kleinen mobilen Einheiten betrieben werden kann,

b) Vorteile in der Physiologie gegenüber herkömmlichen Verfahren, die Dichlordifluormethan verwenden, hat

c) und das hohe Produktionssicherheit und verbesserte Handhabung in sich vereinigt.

Erfindungsgemäß wurden diese Aufgaben dadurch gelöst, daß als Treibmittel ein spezielles Alkanolamin-$CO_2$-Addukt und/oder Alkanolamin/$CO_2$/Wasser-Addukt in Kombination mit einem tert. Amin-Katalysator und gegebenenfalls Monofluortrichlormethan als homogene Mischung verwendet wird.

Die Verwendung von Kohlendioxid-Addukten von Hydroxyaminen bei der Herstellung von Polyurethanen ist an sich bekannt. So ist in der DE-OS 2 200 480 die Verwendung von Ethanolamin-Carbamat in einem Verfahren zur Herstellung eines zelligen PU-Elastomers erwähnt; diese Vorveröffentlichung sagt jedoch nichts darüber aus, ob Ethanolamin-Carbamat fest oder flüssig ist. Aus DE-PS 2 621 582 geht jedoch hervor, daß Carbamate, die Umsetzungsprodukte von primären oder sekundären Aminen mit ein oder zwei Hydroxylgruppen mit Kohlendioxid darstellen, fest sind bzw. fest erhalten werden, wenn man sie durch Einleiten von Kohlendioxid in Alkohol oder andere Lösungsmittel leitet und sich auch beim Vermischen mit einem Polyol nicht einphasig homogen vermischen. Aus dieser Veröffentlichung ist nicht zu entnehmen, daß die infrage stehenden Kohlendioxid-Addukte bei Raumtemperatur flüssig sein oder flüssig erhalten werden können.

Flüssige Carbamate von Aminogruppen aufweisenden Verbindungen beschreibt die DE-OS 1 570 571. Diese Amine sind jedoch beschränkt auf Ethergruppen aufweisende Diamine oder Polyamine, wobei 0,01 bis 50 % der Aminogruppen durch eine Hydroxylgruppe ersetzt sein können. Es werden jedoch vorzugsweise hochmolekulare Amine mit in der Regel nur geringem Gehalt an basischem Stickstoff und oftmals an sekundären Kohlenstoffatomen befindlichen Aminogruppen eingesetzt, die nur geringe Kohlendioxid-Aufnahme erbringen.

Die Verwendung der Produkte gemäß DE-OS 2 200 480 und auch DE-PS 2 621 582 zur Herstellung von Polyurethanschaumstoffen ist gleichfalls bekannt.

DE-OS 2 200 480 lehrt, daß die Amincarbamate im allgemeinen ab etwa 35°C themisch nicht mehr stabil sind und zerfallen. Ähnliches lehrt die DE-OS 1 570 571. Hiernach dürfen die betreffenden Amine nur bei -40 bis +40°C, bevorzugt 0 bis 20°C, durch Umsetzung mit $CO_2$ in die Carbamate überführt werden. Die beispielsweise hergestellten Carbamate dieser Vorveröffentlichung zersetzen sich zum größten Teil bereits bei Raumtemperatur oder bei 30°C.

In EP 121 850 wird berichtet, daß Kohlendioxid-Addukte von ein oder mehrere Hydroxylalkylgruppen aufweisenden Mono-oder Polyaminen, wobei die Aminogruppen primärer und/oder sekundärer und gegebenenfalls auch tertiärer Natur sein können und wobei sie substituiert an oder Kettenglied in acyclischen oder cyclischen aliphatischen Grundkörpern sein können, flüssig erhalten werden und in flüssiger Form ohne Kristallisation erhalten bleiben, wenn sie durch Versetzen von Kohlendioxid und gegebenenfalls Wasser mit den Hydroxylgruppen aufweisenden Aminen hergestellt werden, und daß die solchermaßen hergestellten Addukte homogen in den zur Herstellung von Polyurethanen für gewöhnlich verwendeten Polyolen, insbesondere solchen mit einer Funktionalität $\geq 2$ und einem Molekulargewicht von 60 bis 2000, löslich sind.

Diese EP 121 850 lehrt auch, daß nicht nur Carbamate, die Ammoniumsalze von Alkylcarbaminsäuren darstellen, sondern auch die Salze der Kohlensäure mit diesen Hydroxylgruppen aufweisenden Polyaminen, die dadurch entstehen, daß die Reaktion der Amine mit Kohlendioxid in Gegenwart von Wasser durchgeführt wird, und die Gemische der Salze der Carbaminsäuren und Kohlensäure flüssig sind. Die Unterschiede zwischen Carbamaten als Salze der Carbaminsäure und Carbonaten resp. Hydrogencarbonaten als Salze der Kohlensäure sind dem Fachmann bekannt und z.B. in A. Smola, Mitteilungen des Chemischen Forschungsinstituts der Wirtschaft Österreichs 2, 38-40 und 43-45 (1948) (Chemical Abstracts 43 (1949), 6157 h) beschrieben.

Wie sich jedoch gezeigt hat, sind eine Reihe solcher Produkte mit Trichlorfluormethan nicht über längere Zeiträume zusammen in der Polyolkomponente lagerfähig, ohne daß es zu einer deutlichen Aktivitätsminderung kommt.

Eine besondere Aufgabe bestand als darin, ein Verfahren zur Verfügung zu stellen, bei dem Trichlorfluormethan und Aminoalkohol-$CO_2$-Addukt ohne Aktivitätsveränderung miteinander gelagert werden können, ohne daß ein Stabilisator oder ein anderes Hilfsmittel des Standes der Technik benötigt wird.

Gegenstand der vorliegenden Erfindung ist ein Verfahren zur Herstellung eines zelligen Polyurethans durch Umsetzung

A) eines Polyisocyanats mit

B) einer NCO-reaktiven Komponente, enthaltend

1. mindestens eine NCO-reaktive Gruppe aufweisende Komponente des Molekulargewichtsbereiches 60 bis 1999 und der Funktionalität 2 bis 8,

2. gegebenenfalls mindestens eine NCO-reaktive Gruppe aufweisende Komponente des Molekulargewichtsbereichs 2000 bis 12000 und der Funktionalität 2 bis 8,

3. in Gegenwart eines Amin-Kohlendioxyd-Adduktes und

4. gegebenenfalls Wasser, Treibmitteln, Schaumstabilisatoren, Katalysatoren sowie anderen an sich bekannten Hilfs-und Zusatzmitteln, dadurch gekennzeichnet, daß die Komponente 3. als eine homogene Mischung aus

0,05 bis 25 Gew.-Teilen (bezogen auf 100 Gew.-Teile B 1. + B 2.) eines gegebenenfalls Wasser enthaltenden Adduktes von Kohlendioxid an ein mindestens eine sekundäre Aminogruppe und mindestens eine primäre oder sekundäre Hydroxylgruppe aufweisendes Amin,
0 bis 50 Gew.-Teilen (bezogen auf 100 Gew.-Teile B 1. + B 2.) Monofluortrichlormethan und
0,05 bis 25 Gew.-Teilen (bezogen auf 100 Gew.-Teile B 1. + B 2.) eines Aminkatalysators besteht.

Bevorzugt ist ein Verfahren, das darin besteht, daß das Amin-Kohlendioxid-Addukt durch Einwirkung von Kohlendioxid auf das Amin, gegebenenfalls in Gegenwart von Wasser und/oder 2 bis 8 Hydroxylgruppen aufweisenden Polyolen mit einer OH-Zahl von über 112 in Abwesenheit von Lösungsmitteln vom Typ der aliphatischen (Halogen)Kohlenwasserstoffe, der gegebenenfalls nitrierten oder halogierten, gegebenenfalls Alklgruppen tragenden aromatischen Kohlenwasserstoffe, der niederen aliphatischen Alkohole, der Säureamide, Lactame und der aprotisch-polaren Lösungsmittel bei Temperaturen von -25°C bis +160°C, erhalten worden ist.

Erfindungsgemäß bevorzugt ist ein Amin-Kohlendioxid-Addukt, das

a) einen Gehalt an basischem Stickstoff von ca. 17,5 bis ca. 3,5 Gew.-%, bevorzugt ca. 12 bis ca. 3,5 Gew.-%,

b) einen Gehalt an Hydroxylgruppen von ca. 23 bis ca. 8,5 Gew.-%, bevorzugt ca. 14,5 bis 8,5 Gew.-%,

c) einen Kohlendioxid-Gehalt von ca. 37 bis ca. 1 Gew.-%, bevorzugt ca. 37 bis ca. 2,5 Gew.-%, und

d) einen Gehalt an Wasser von 0 bis ca. 15 Gew.-% aufweist.

Erfindungsgemäß ist ferner bevorzugt, daß als Polyisocyanate gegebenenfalls modifizierte Toluylendiisocyanate oder Phosgenierungsprodukte von Formaldehyd/Anilin-Kondensaten verwendet werden und daß als Komponente B 1. 3 bis 6 Hydroxylgruppen aufweisende Polyether des Molekulargewichts 200 bis 1000 Verwendung finden.

Ganz besonders bevorzugtes Kohlendioxid-Amin-Addukt ist das gegebenenfalls Wasser enthaltende $CO_2$-Addukt von N-Methyl-2-aminoethanol.

Erfindungsgemäß wird vorteilhaft das Vorschäumverfahren angewendet.

Hierbei ist besonders überraschend, daß Gemische von $CFCl_3$ mit $CO_2$-Addukten von Aminoalkoholen mit sekundären Aminogruppen lagerstabiler als solche mit $CO_2$-Addukten von Aminoalkoholen mit primären Aminogruppe sind. Von z.B. Dichlormethan ist genau der umgekehrte Effekt bekannt, siehe z.B. J.E. Mills u. a., Org. Prep. Proced. Int. 16 (1984), 97 -114.

Das erfindungsgemäße Verfahren bietet folgende Vorteile:

1. Ersatz eines Teils des Fluorchlorkohlenwasserstoff-Treibmittels durch das umweltfreundliche Kohlendioxid.

2. Lagerstabile Formulierung mit Trichlorfluormethan und Aminoalkohol-$CO_2$-Addukt ohne Mitverwendung von Stabilisatoren.

3. Sehr gute Ausschäumeigenschaften, die den Stand der Technik übertreffen bezüglich Fließfähigkeit, Abdichtung undichter Formstellen und Produktionssicherheit. Bei der Verwendung von Dichlorfluormethan als Vorschäummittel beobachtete Lunker-Bildung tritt nicht mehr auf.

4. Die Aminoalkohol-$CO_2$-Addukte wirken in günstiger Weise als Cokatalysatoren. Sie werden eingebaut und tragen so zur Senkung des Geruchsniveaus der Schaumteile bei. Durch die Kombination aus t-Amin-Kataly sator und Aminoalkohol-Addukt sind folgende Forderungen erfüllt:
Geruchsarmut
sofortiges An-und Aufschäumen
schnelles Aushärten.

5. Durch den Verzicht auf Treibmittel mit einem Kp <20°C sind technische Vereinfachungen möglich, da die Polyolkomponente nicht mehr unter Druck gehalten werden muß. Dies gilt auch für Vor-Ort-Verschäumungen.

6. Keine ungewollte Kennzahlverschiebung durch beabsichtigtes und/oder vorzeitiges Verdampfen des niedrigsiedenden Verschäummittels möglich.

Beim erfindungsgemäßen Verfahren kommen zum Einsatz:

Komponente A:

Als Ausgangskomponente (A) aliphatische, cycloaliphatische, araliphatische, aromatische und heterocyclische Polisocyanate, wie sie z.B. von W. Siefken in Justus Liebigs Annalen der Chemie, 562, Seiten 75 bis 136, beschrieben werden, beispielsweise solche der Formel
$Q\ (NCO)_n$

in der
n 2 bis 4, vorzugsweise 2, und
Q einen aliphatischen Kohlenwasserstoffrest mit 4 bis 18, vorzugsweise 6 bis 10, C-Atomen,
einen cycloaliphatischen Kohlenwasserstoffrest mit 4 bis 15, vorzugsweise 5 bis 10, C-Atomen,
einen aromatischen Kohlenwasserstoffrest mit 6 bis 15, vorzugsweise 6 bis13, C-Atomen,
oder einen araliphatischen Kohlenwasserstoffrest mit 8 bis 15, vorzugsweise 8 bis 13, C-Atomen,
bedeuten, z.B. 1,6-Hexamethylendiisocyanat, 1,12-Dodecandiisocyanat, Cyclohexan-1,3,-und -1,4-diisocyanat sowie beliebige Gemische dieser Isomeren, 1-Isocyanato-3,3,5-trimethyl-5-isocyanatomethyl-cyclohexan (DE-AS 1 202 785, US-PS 3 401 190), 2,4-und 2,6 Hexahydrotoluylendiisocyanat sowie beliebige Gemische dieser Isomeren, Hexahydro-1,3-und/oder -4,4'-diphenylmethan-diisocyanat, 1,3-und 1,4-Phenylendiisocyanat, 2,4-und 2,6-Toluylendiisocyanat sowie beliebige Gemische dieser Isomeren, Diphenylmethan-2,4'-und/oder -4,4'-diisocyanat, Naphthylen-1,5-diisocyanat.

Weitere Beispiele für erfindungsgemäß zu verwendende Polyisocyanate sind in der DE-OS 3 312 215, Seiten 19-21, beschrieben.

Bevorzugt eingesetzt werden aromatische Polyisocyanate, besonders bevorzugt werden in der Regel die technisch leicht zugänglichen Polyisocyanate, z.B. das 2,4-und 2,6-Toluylendiisocyanat sowie beliebige Gemische dieser Isomeren ("TDI"), Polyphenyl-polymethylen-poylisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4-und/oder 2,6-Toluylendiisocyanat ableiten.

Komponenten B 1. und B 2.:

Diese Verbindungen werden im einzelnen in der DE-OS 3 312 215 auf den Seiten 21 bis 37 beschrieben, auf die hier Bezug genommen wird.

Komponente B 3.:

Die im erfindungsgemäßen Verfahren einzusetzenden, bei 20°C flüssigen, vorzugsweise aber festen Amin-Kohlendioxid-Addukte werden durch Einwirkung von Kohlendioxid auf das Amin, gegebenenfalls in Gegenwart von Wasser, in Abwesenheit von Lösungmitteln vom Typ der aliphatischen (Halogen)-Kohlenwasserstoffe, der gegebenenfalls nitrierten oder halogenierten, gegebenenfalls Alkylgruppen tragenden aromatischen Kohlenwasserstoffe, der niederen aliphatischen Alkohole, der Säureamide, Lactame und der aprotisch-polaren Lösungsmittel (wie z.B. Ketonen, Ethern, Nitrilen, N-subst. Säureamiden oder N-subst. Lactamen) bei Temperaturen von -25°C bis +16°C, bevorzugt 0 bis 130°C, besonders bevorzugt 15 bis 100°C, erhalten. Gegebenenfalls mitzuverwendende Lösungsmittel sind dagegen 2 bis 8 Hydroxyl gruppen aufweisenden Polyole mit einer OH-Zahl > 112 oder aminische Katalysatoren wie sie auch als Komponente B 5. Verwendung finden, bevorzugt wird jedoch ohne Lösungsmittel gearbeitet (Wasser ist in diesem Sinne kein Lösungsmittel).

Die bei 20°C flüssigen, vorzugsweise aber festen, gegebenenfalls Wasser enthaltenden Amin-Kohlendioxid-Addukte weisen im allgemeinen

a) einen Gehalt an basischem Stickstoff von ca. 17,5 bis ca. 3,5 Gew.-%,
b) einen Gehalt an Hydroxylgruppen von ca. 23 bis ca 8,5 Gew.-%,
c) einen Gehalt an Kohlendioxid von ca. 37 bis ca. 1,0 Gew.-% und
d) einen Gehalt an Wasser von 0 bis ca. 15 Gew.-%, bevorzugt
a) einen Gehalt an basischem Stickstoff von ca. 12 bis ca. 3,5 Gew.-%,
b) einen Gehalt an Hydroxylgruppen von ca. 14,5 bis ca. 8,5 Gew.-%,
c) einen Gehalt an Kohlendioxid von ca. 37 bis ca. 2,5 Gew.-% und
d) einen Gehalt an Wasser von ca. 3 bis ca. 15 Gew.-% auf.

Als Verbindungen mit mindestens einer primär, sekundär oder tertiär gebundenen Hydroxylgruppe und mindestens einer sekundären Aminogruppe kommen zur Herstellung der Kohlendioxid-Addukte B 3. infrage: Monoamino-mono-oder -dihydroxyverbindungen (mit sekundären Aminogruppen), z.B. N-Methyl-2-aminoethanol, N-Ethyl-2-aminoethanol, 2-(2-N-Methylaminoethyl)-ethandiol-1,2, ferner Bis-hydroxyalkylderivate primäre Amine, z.B. Bis-β-hydroxyethyl-amin, Bis -(β-hydroxypropyl)-amin oder N,N,N'-Tris-(β-hydroxypropyl)-ethylendiamin. Weiterhin geeignet sind Bis-(hydroxyalkyl)-diamine, die aus entsprechenden gerad-oder

verzweigtkettigen aliphatischen oder auch cycloaliphatischen Diaminen durch Alkoxylierung mit Alkylenoxiden, vorzugsweise Ethylenoxid und/oder Propylenoxid, erhalten werden. Beispiele sind N,N'-Bis-(β-hydroxypropyl)-ethylendiamin, N,N'-Bis-(β-hydroxypropyl)-ethylendiamin, N,N'-Bis-(β-hydroxyethyl)-propylendiamin-1,2, N,N'-Bis-(β-hydroxypropyl)-propandiamin-1,3, N,N'-Bis-(β-hydroxyethyl)-1-methyl-2,4-bzw. -2,6-diaminocyclohexan, N,N'-Bis-(β-hydroxypropyl)-p-xylylendiamin, N-(β-hydroxyethyl)-N'-(β-hydroxypropyl)-ethylendiamin. Man kann auch oxalkylierte Tri-und Polyamine verwenden, z.B. Tris-(β-hydroxyethyl)-1,6,11-triamino-undecan. Ebenso sind Gemische verschiedener Oxalkylierungsstufen einsetzbar, z.B. Gemische aus Bis-und Tris-hydroxethyl-ethylendiamin.

Bevorzugt sind als bei Raumtemperatur feste oder flüssige Amine zur Herstellung der gegebenenfalls Wasser enthaltenden Amin-Kohlendioxid-Addukte solche Aminverbindungen, die man sich

a) durch Reaktion von Ammoniak mit 2 Mol Ethylen-oder Propylenoxid

b) durch Reaktion von $C_1$-$C_4$-Alkyl-amin mit 1 Mol Ethylen-oder Propylenoxid

oder

c) durch Reaktion von Ethylen-oder Propylen-1,2-diamin mit 2 Mol Ethylenoxid oder Propylenoxid

hergestellt denken kann.

Besonders bevorzugt sind vor allem N-Methyl-2-aminoethanol, N-Methyl-2-aminopropanol-1, N-Methyl-3-aminopropanol-1, N-Ethyl-2-aminoethanol, Di-(2-hydroxyethyl)-amin und Di-(2-hydroxypropyl)-amin.

Das für das vorliegende Verfahren in der bevorzugten Ausführungsform (Mitverwendung von Trichlorfluormethan) günstigste Amin ist N-Methyl-2-aminoethanol-1.

Diese Hydroxylgruppen aufweisenden Amine werden mit Kohlendioxid in Kohlendioxid-Addukte überführt. Dabei entstehen ohne Mitverwendung von Wasser sog. Carbamate, die Ammoniumsalze von Alkylcarbaminsäuren darstellen.

Verwendet man stöchiometrische oder noch größere Mengen (bezogen auf das Amin) an Wasser mit, so werden, Kohlensäuresalze der betreffenden Amin-Verbindungen erhalten. Bei anteiliger Mitverwendung von Wasser, die unter der zur vollständigen Kohlensäuresalz-Bildung notwendigen Menge bleibt, erhält man die entsprechenden Gemische aus Carbamaten und (Hydrogen)Carbonaten. Dabei wird in Abwesenheit von Lösungsmitteln vom Typ der aliphatischen (Halogen)Kohlenwasserstoffe, der gegebenenfalls nitrierten halogenierten, gegebenefalls Alkylgruppen tragenden aromatischen Kohlenwasserstoff, der niederen aliphatischen Alkohle, der aprotisch-polaren Lösungsmittel, der Säureamide und Lactame bei Temperaturen von -25°C bis +160°C, vorzugsweise 0 bis 130°C, besonders bevorzugt 15 bis 100°C gearbeitet. Gegebenenfalls mitzuverwendende Lösungsmittel sind dagegen 2 bis 8 Hydroxylgruppen aufweisende Polyole mit einer OH-Zahl von über 112 oder aminische Katalysatoren, wie sie auch als Komponente B 5. Verwendung finden, bevorzugt wird jedoch ohne Lösungsmittel gearbeitet (Wasser ist in diesem Sinne kein Lösungsmittel).

Das hier über die auftretenden Reaktionswärmen und einzuhaltenden Reaktionstemperaturgrenzen gesagte gilt für die Herstellung der Carbamate als auch der Kohlensäuresalze; bei den letzteren ist jedoch zu beachten, daß bereits die Vereinigung von Amin und Wasser eine beträchtliche Wärmefreisetzung ergibt; die bei der Kohlendioxid-Begasung auftretenden Temperaturen liegen im Schnitt unter jenen der Carbamat-Herstellung.

Die Kohlendioxid-Addukte sind klare, niederviskose Flüssigkeiten von im allgemeinen heller Farbe, sie sind stabil und zeigen keinerlei Kristallisationstendenz. Sie sind im allgemeinen löslich in polaren Medien wie Methanol, Ethanol, Dimethylformamid, Acetonitril, Dimethylsulfoxid, Sulfolan etc. oder in niedermolekularen Polyolen der OH-Zahl von z.B. 200 bis 1800, wie sie durch Addition von z.B. Ethylenoxid auf z.B. Glyzerin oder Trimethylolpropan zustande kommen. Sie sind jedoch in Mengen von ca. bis 50 Gew.-% auch in den Polyolgemischen lagerstabil und einphasig klar löslich wie sie z.B. zur Herstellung von Polyurethanhartschaum verwendet werden. Bei der erfindungsgemäßen Herstellung von zelligen Polyurethanen haben sie eine Treibmittel-, Vernetzer-und Katalysatorwirkung.

Die Addukte B 3. werden in einer Menge von 0,1 bis 30 Teilen, bevorzugt 0,15 bis 15 Teilen, besonders bevorzugt 0,2 bis 2,99 Teilen, bezogen auf 100 Teile B 1. + B 2. eingesetzt.

Die Herstellung der Addukte kann mit jeder Form von Kohlendioxid vorgenommen werden, bevorzugt wird ungereinigtes Kohlendioxid aus Stahlbomben verwendet. Die Herstellung der Addukte kann weiterhin bei Unter-, Über-, bevorzugt jedoch bei Normaldruck vorgenommen werden. Die Temperaturen, bei denen die Herstellung vorgenommen werden kann, reichen im allgemeinen von ca. -25°C bis an die Siedepunkte der betreffenden Amine, soweit sie noch bei Normaldruck unter 200°C sieden, sonst bis ca. +160°C.

Ein engerer, bevorzugter Bereich beträgt ca. 0 bis 130°C, besonders bevorzugt ist 15 bis 100°C. Dabei kann so vorgegangen werden, und dies ist bevorzugt, daß ohne Kühlung und ohne externes Erwärmen in das in einem geeigneten Rührgefäß, gegebenenfalls mit einer geeigneten Menge Wasser versetzte, vorgelegte Amin Kohlendioxid im kräftigen Strom eingeleitet wird. Durch die in den allermeisten Fällen

sofort einsetzende, unter starker Wärmeabgabe erfolgende Reaktion steigt die Gemischtemperatur rasch auf ca. 40 bis 130°C an. Gegen Ende der Reaktion sinkt die Temperatur deutlich ab. Bei einem durch exotherme Reaktion bedingten starken Ansteigen der Innentemperatur, z.B. auf 100°C wird vorzugsweise extern gekühlt, um bei zum hohen Temperaturen eintretenden Nebenreaktionen (z.B. Cyclisierung) und Verfärbungen zu begegnen.

Es ist auch möglich, von vornherein das Amin bzw. Amin/$H_2O$-Gemisch auf erhöhte Temperatur zu bringen und dann erst $CO_2$ einzuleiten. Keinerlei Vorteile bringt es jedoch, obwohl es möglich ist, die Reaktionstemperaturen auf -40 bis +40°C, wie es in DE-OS 1 570 571 beschrieben ist, zu halten. Höhere Temperatur ist zur Verbesserung der Rührfähigkeit oftmals sogar angebracht.

Komponente B 4.:

Als gegebenenfalls mitzuverwendendes Treibmittel wird Trichlorfluormethan eingesetzt. Bevorzugt wird es in Mengen von 0,5 bis 50 Teilen, bezogen auf 100 Teile B 1. und B 2. eingesetzt.

Ferner werden Amin-Katalysatoren eingesetzt, z.B. tertiäre Amine, wie Triethylamin, Tributylamin, N-Methylmorpholin, N-Ethylmorpholin, N,N,N',N'-Tetramethyl-ethylendiamin, Pentamethyl-diethylen-, Triamin und höhere Homologe (DE-OS 2 624 527 und 2 624 528), 1,4-Diazabicyclo-(2,2,2)-octan, N-Methyl-N'-dimethylaminoethylpiperazin, Bis-(dimethylaminoalkyl)-piperazine (DE-OS 2 636 787), N,N-Dimethylbenzylamin, N,N-Dimethylcyclohexylamin, N,N-Diethylbenzylamin, Bis-(N,N-diethylaminoethyl)-adipat, N,N,N'-N'-Tetramethyl-1,3-butandiamin, N,N-Dimethyl-β-phenylethylamin, 1,2-Dimethylimidazol, 2-Methylimidazol, monocyclische und bicyclische Amidine (DE-OS 1 720 633), Bis-(dialkylamino)-alkylether (US-PS 3 330 782, DE-AS 1 030 558, DE-OS 1 804 361 und 2 618 280) sowie Amidgruppen (vorzugsweise Formamidgruppen) aufweisende tertiäre Amine gemäß den DE-OS 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, infrage.

Gegenüber Isocyanatgruppen aktive Wasserstoffatome aufweisende tertiäre Amine als Katalysatoren sind z.B. Triethanolamin, Triisopropanolamin, N-Methyldiethanolamin, N-Ethyldiethanolamin, N,N-Dimethylethanolamin, deren Umsetzungsprodukte mit Alkylenoxiden wie Propylenoxid und/oder Ethylenoxid sowie sekundär-tertiäre Amine gemäß DE-OS 2 732 292:

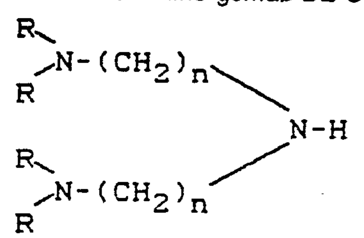

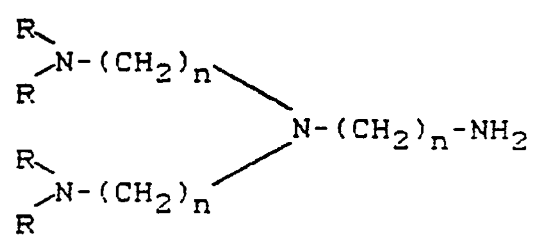

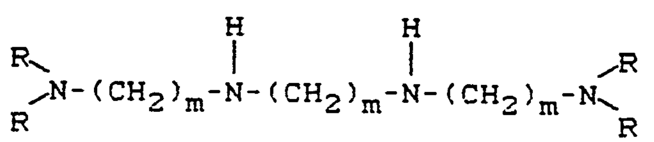

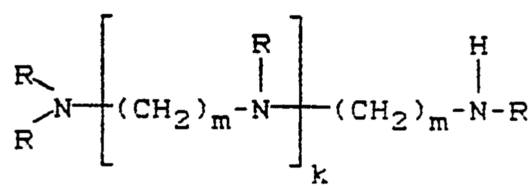

wobei
die Reste R unabhängig voneinander gegebenenfalls verzweigte Alkylgruppen mit 1 bis 4 C-Atomen darstellen,
die Zahlen n unabhängig voneinander für 2 oder 3,
die Zahlen m unabhängig voneinander für 2 oder 3 und
k für eine ganze Zahl zwischen 1 und 5 stehen,
und deren Formylierung-und Ureidisierungs-Produkte.

Beispiele für die bevorzugt einzusetzenden Amin-Katalysatoren sind:

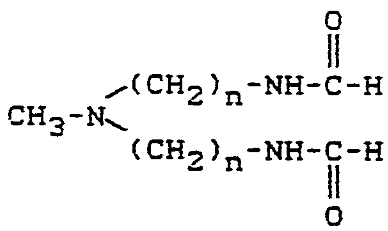

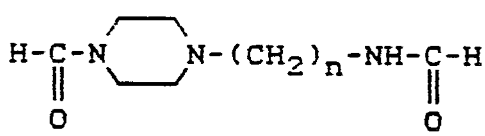

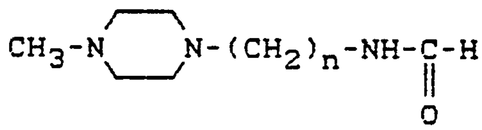

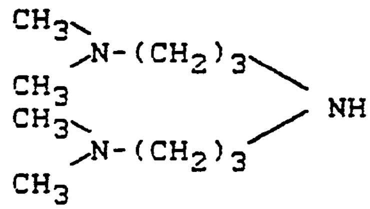

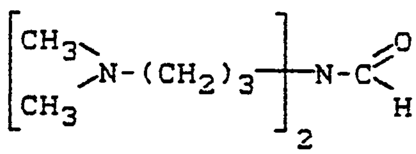

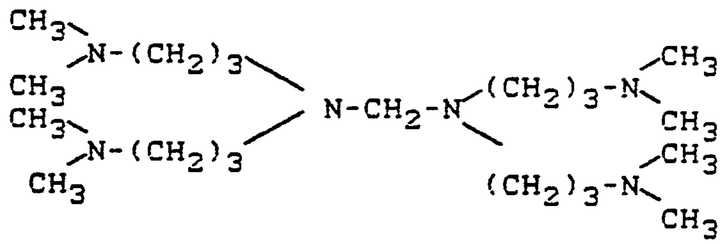

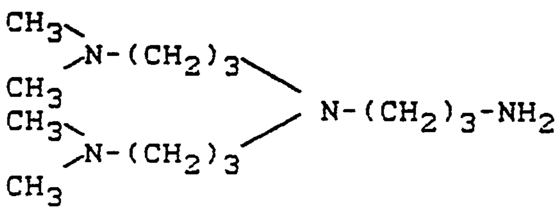

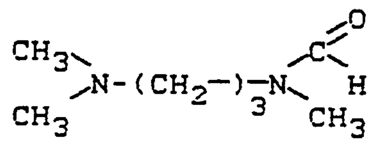

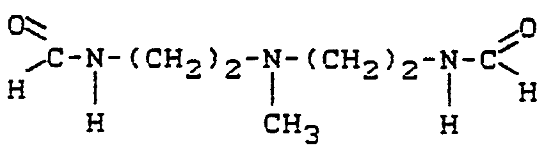

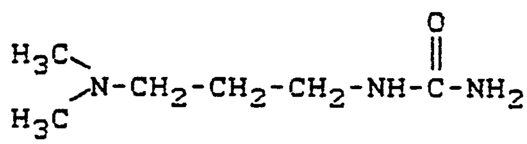

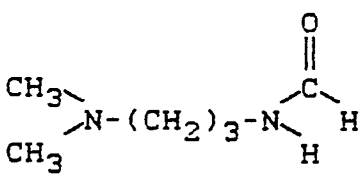

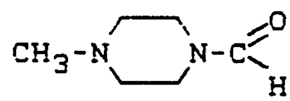

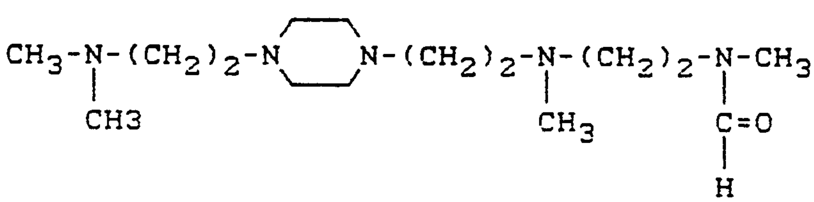

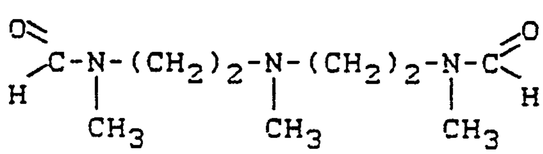

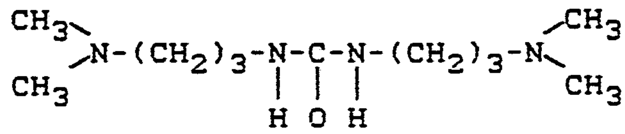

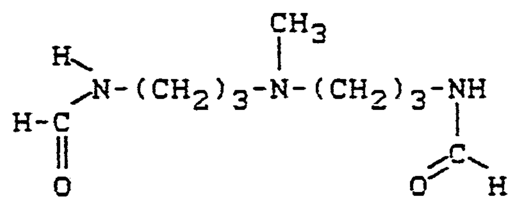

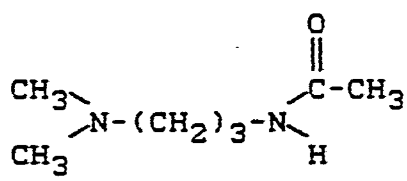

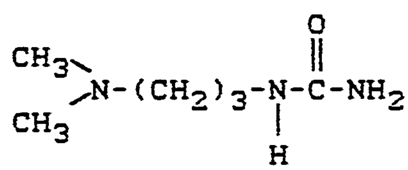

Ganz besonders bevorzugte Katalysatoren sind, N,N-Dimethylaminopropylformamid und N-Methylimidazol.

Als Katalysatoren kommen ferner Silaamine mit Kohlenstoff-Silizium-Bindungen, wie sie z.B. in der DE-Patentschrift 1 229 290 (entsprechend der US-PS 3 620 984) beschrieben sind, infrage, z.B. 2,2,4-Trimethyl-2-silamorpholin und 1,3-Diethylaminomethyl-tetramethyl-disiloxan.

Als weitere Hilfs-und Zusatzmittel kommen gegebenenfalls infrage:

a) Wasser und/oder zusätzliche leicht flüchtige anorganische oder organische Substanzen als weitere Treibmittel. Als organische Treibmittel kommen z.B. Aceton, Ethylidenchlorid, Vinylidenchlorid, Chlordifluormethan, Dichlordifluormethan, als anorganische Treibmittel z.B. Luft, $CO_2$ oder $N_2O$, infrage. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

b) Als weitere Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-OS 1 769 043).

Die Reaktion zwischen NCO-Gruppen und Zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in der DE-OS 2 062 288, 2,062,289, 2 117 576 (US-PS 3 758 444), 2 129 198, 2 330 175 und 2 330 211 beschrieben.

Erfindungsgemäß können zusätzlich auch organische Metallverbindungen, insbesondere die an sich bekannten organischen Zinnverbindungen, als Katalysatoren verwendet werden.

Selbstverständlich können alle obengenannten Katalysatoren als Gemische eingesetzt werden.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die zusätzlichen Katalysatoren werden in der Regel in einer Menge zwischen 0,001 und 10 Gew.-%, bezogen auf die Gesamtmenge an Komponenten B 1. und B. 2., eingesetzt.

Mitverwendet werden können gegebenenfalls auch Reaktionsverzögerer, z.B. sauer reagierende Stoffe wie Salzsäure oder organische Säurehalogenide, ferner Zellregler der an sich bekannten Art und Flammschutzmittel, ferner Stabilisatoren gegen Alterungs-und Witterungseinflüsse, Weichmacher und fungistatisch und bakteriostatisch wirkende Substanzen sowie Füllstoffe.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs-und Wirkungsweise dieser Zusatzmittel sind im Kuststoff-Handbuch, Band VII, herausgegeben von Vieweg und Höchtlen, Carl-Hanser-Verlag, München 1966, z.B. auf den Seiten 103 bis 113 beschrieben.

Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Erfindungsgemäß lassen sich auch kalthärtende Schaumstoffe herstellen (vgl. GB-PS 1 162 517, DE-OS 2 153 086).

Selbstverständlich können auch Schaumstoffe durch Blockverschäumung oder nach dem an sich bekannten Doppeltransbandverfahren hergestellt werden.

Erfindungsgemäß bevorzugt ist die Schaumstoffherstellung nach dem Vorschäumverfahren ("frothing process"; vgl. z.B. Kunststoff-Handbuch Band VII, herausgegeben von Vieweg und Höchtlen, Carl-Hanser-Verlag, München 1966, S. 455, 456, 509, 534).

Die erfindungsgemäß herstellbaren Polyurethanschäume sind weich, halbhart und bevorzugt hart. Sie dienen z.B. zur Kühlmöbelisierung, ferner zur Erstellung von Sprühisolierungen, Überschichtungen und als Einkomponentenschaum.

Beispiele

Beispiel 1

Rezeptur:

Polyolkomponente

90 g eines Polyethers der OH-Zahl 465, der durch Addition von Propylenoxid an eine wäßrige Saccharoselösung erhalten wurde,
10 g eines Polyethers der OH-Zahl 650, erhalten durch Addition von Propylenoxid an Ethylendiamin,
2 g eines Siloxan-polyether-copolymers als Schaumstabilisator,
2 g Wasser;
100 g dieser Formulierung werden mit 4,5 g einer 3:1-Mischung aus einem 10 Gew.-% Wasser enthaltenden Addukt aus $CO_2$ und N-Methylethanolamin und N,N-Dimethylaminopropylformamid und
38 g Trichlorfluormethan bei RT intensiv vermischt.

Dieses Gemisch wurde mit 153 g rohem 4,4'-Diisocyanatodiphenylmethan verschäumt. Es entstand ein Polyurethanhartschaumstoff, der im Vergleich zu mit Dichloridfluormethan hergestellten Hartschaumstoffen nur ganz geringe "Frothblasen" aufwies. Außerdem konnten ein sehr gleichmäßiges Zellbild, nur geringe Randzonen, gute Rohdichteverleihung und ein sehr gutes Formfüllvermögen festgestellt werden.

Verschäumungs-und physikalische Daten:

Liegezeit 0 bis 1 sec.
Abbindezeit 90 sec.
freie Rohdichte 21 kg/m³
Zellbild gut bis sehr gut.

Beispiel 2

Rezeptur:

Polyolkomponente wie Beispiele 1

100 g dieser Formulierung werden vermischt mit
3,9 g eines 3:1-Gemisches aus 10 Gew.-% Wasser enthaltenden Addukt von N-Methylethanolamin und $CO_2$ und 1-Methylimidazol
und
38 g Trichlortrifluormethan.

Dieses Gemisch wurde mit 153 g rohem 4,4'-Diisocyanatodiphenylmethan verschäumt. Es entstand ein Polyurethanhartschaumstoff, der im Vergleich zu mit Dichlordifluormethan hergestellten PU-Hartschaumstoffen nur ganz geringe "Frothblasen" aufwies. Außerdem konnte ein sehr gleichmäßiges Zellbild, eine nur geringe Randzone, gute Rohdichteverteilung und ein sehr gutes Formfüllverhalten bei kurzer Formzeit festgestellt werden.

Verschäumungs-und physikalische Daten:

Liegezeit 0 bis 1 sec
Abbindezeit 100 sec
freie Rohdichte 21 kg/$m^3$
Zellbild gut

Beispiel 3 (Vergleichsbeispiel)

Rezeptur:

100 Teile der in den Beispielen 1 und 2 verwendeten Polyolmischung
1 Teil 1-Methylimidazol und
38 Teile Trichlorfluormethan werden vermischt und mit
153 Teilen rohem 4,4'-Diisocyanatodiphenylmethan verschäumt.

Es entstand ein nichtgefrothter Polyurethanhartschaumstoff mit Randzone, mittlerer Rohdichteverteilung und einem schlechten Formfüllverhalten.

Verschäumungs-und physikalische Daten:

Liegezeit 14 sec.
Abbindezeit 115 sec.
freie Rohdichte 23 kg/$m^3$
Zellbild mittel bis schlecht

**Ansprüche**

1. Verfahren zur Herstellung eines zelligen Polyurethans durch Umsetzung
A) eines Polyisocyanats mit
B) einer NCO-reaktiven Komponente, enthaltend
1. mindestens eine NCO-reaktive Gruppe aufweisende Komponente des Molekulargewichtsbereiches 60 bis 1999 und der Funktionalität 2 bis 8,
2. gegebenenfalls mindestens eine NCO-reaktive Gruppe aufweisende Komponente des Molekulargewichtsbereichs 2000 bis 12000 und der Funktionalität 2 bis 8,
3. in Gegenwart eines Amin-Kohlendioxyd-Adduktes und
4. gegebenenfalls Wasser, Treibmitteln, Schaumstabilisatoren, Katalysatoren sowie anderen an sich bekannten Hilfs-und Zusatzmitteln,

dadurch gekennzeichnet, daß die Komponente 3. als eine homogene Mischung aus
0,05 bis 25 Gew.-Teilen (bezogen auf 100 Gew.-Teile B 1. + B 2.) eines gegebenenfalls Wasser enthaltenden Adduktes von Kohlendioxid an ein mindestens eine sekundäre Aminogruppe und mindestens eine primäre oder sekundäre Hydroxylgruppe aufweisendes Amin,
0 bis 50 Gew.-Teilen (bezogen auf 100 Gew.-Teile B 1. + B 2.) Monofluortrichlormethan und
0,05 bis 25 Gew.-Teilen (bezogen auf 100 Gew.-Teile B 1. + B 2.) eines Aminkatalysators
eingesetzt wird.

2. Verfahren nach Anspruch 1, dadurch gekennzeichnet, daß das Amin-Kohlendioxid-Addukt durch Einwirkung von Kohlendioxid auf das Amin, gegebenenfalls in Gegenwart von Wasser und/oder 2 bis 8 Hydroxylgruppen aufweisenden Polyolen mit einer OH-Zahl von über 112 in Abwesenheit von Lösungsmitteln vom Typ der aliphatischen (Halogen)Kohlenwasserstoffe, der gegebenenfalls nitrierten oder halogenierten, gegebenenfalls Alkylgruppen tragenden aromatischen Kohlenwasserstoffe, der niederen aliphatischen Alkohole, der Säureamide, Lactame und der aprotisch-polaren Lösungsmittel bei Temperaturen von -25°C bis +160°C, erhalten worden ist.

3. Verfahren nach Anspruch 1 und 2, dadurch gekennzeichnet, daß das Amin-Kohlendioxid-Addukt,
a) einen Gehalt an basischem Stickstoff von ca. 17,5 bis ca. 3,5 Gew.%, bevorzugt ca. 12 bis ca. 3,5 Gew.-%,
b) einen Gehalt an Hydroxylgruppen von ca. 23 bis ca. 8,5 Gew.-%, bevorzugt ca. 14 bis 8,5 Gew.-%,
c) einen Kohlendioxid-Gehalt von ca. 37 bis ca. 1 Gew.-%, bevorzugt ca. 37 bis ca. 2,5 Gew.-%, und
d) einen Gehalt an Wasser von 0 bis ca. 15 Gew.-% aufweist.

4. Verfahren nach Anspruch 1 bis 3, dadurch gekennzeichnet, daß als Polyisocyanate gegebenenfalls modifizierte Toluylendiisocyanate oder Phosgenierungsprodukte von Formaldehyd/Anilin-Kondensaten verwendet werden.

5. Verfahren nach Anspruch 1 bis 4, dadurch gekennzeichnet, daß als Komponente B 1. 3 bis 6 Hydroxylgruppen aufweisende Polyether des Molekulargewichts 200 bis 1000 Verwendung finden.

6. Verfahren nach Anspruch 1 bis 5, dadurch gekennzeichnet, daß als gegebenenfalls Wasser enthaltendes $CO_2$-addukt das von N-Methyl-2-aminoethanol eingesetzt wird.

7. Verfahren nach Anspruch 1 bis 6, dadurch gekennzeichnet, daß die Umsetzung nach dem Vorschäumverfahren erfolgt.